# EUROPEAN PATENT SPECIFICATION

(11) **EP 1 953 402 B1**
(45) Date of publication and mention of the grant of the patent: **13.04.2011**
(21) Application number: 07116731.6
(22) Date of filing: 19.09.2007
(51) Int. Cl.: F16D 1/108

(54) **Belt pulley for the output shaft of a gear, gear, electric motor, and output shaft**
Riemenscheibe für die Abtriebswelle eines Getriebes, Getriebe, Elektromotor und Abtriebswelle
Poulie à courroie pour l'arbre de sortie d'un engrenage, engrenage, moteur électrique et arbre de sortie

(30) Priority: 31.01.2007 EP 07300755; 08.05.2007 EP 07301020
(43) Date of publication of application: 06.08.2008
(73) Proprietor: Dunkermotoren GmbH, 79848 Bonndorf (DE)
(72) Inventor: Gerlich, Knut, 78073 Bad Dürrheim (DE); Schneider, Andrej, 79848 Bonndorf (DE); Tascher, Gerhard, 79848 Bonndorf (DE); Pfendler, Klaus, 79848 Bonndorf (DE)
(74) Representative: Dreiss

(56) References cited:
- WO-A-00/47908
- AU-B2- 481 202
- CH-A- 159 479
- GB-A- 1 264 078
- US-A- 5 052 842
- US-A- 5 275 577
- US-A1- 2002 179 305

## Description

The invention relates to a belt pulley for the output shaft of a gear being driven by an electric motor, with a support for a drive belt at the outer periphery and a receptacle for an axle in the centre, according to the preamble of claim 1, to a gear with an output shaft, for an electric motor, according to the preamble of claim 2, to an electric motor according to the preamble of claim 3, and to an output shaft for a gear, for receiving a belt pulley according to the preamble of claim 4.

Such belt pulleys and output shafts are known in the art, e.g. from GB-A-1264078 and US 2002/179305 A1.

The invention was made in the field of door automation, but can be used also in other fields.

Electric motors used for door automation often use worm gears in connection with a belt drive. Normally those belts are toothed belts.

Most of possible applications are low-cost applications. But both, the worm gear and the belt drive are complex parts.

The problem to be solved therefor lies in finding a solution that can be produced in a low-cost manner.

This problem is solved according to the invention by a belt pulley according to the teaching of claim 1, a gear according to the teaching of claim 2, an electric motor according to the teaching of claim 3, and an output shaft according to the teaching of claim 4.

The invention is based on the insight, that in most situations the high mechanical properties of state of the art solutions are not really necessary.

Further embodiments of the invention are to be found in the subclaims and in the following description.

In the following the invention will be described with the aid of the enclosed drawings.
- Figure 1: shows a belt pulley according to the invention both, as front view and as cross section.
- Figure 2: shows a gear that according to the invention is provided with a belt pulley on its output shaft.
- Figure 3: shows an electric motor that according to the invention is provided with a gear that according to the invention is provided with a belt pulley on its out-put shaft.
- Figure 4: shows an output shaft for a gear according to the invention, also carrying a worm wheel.

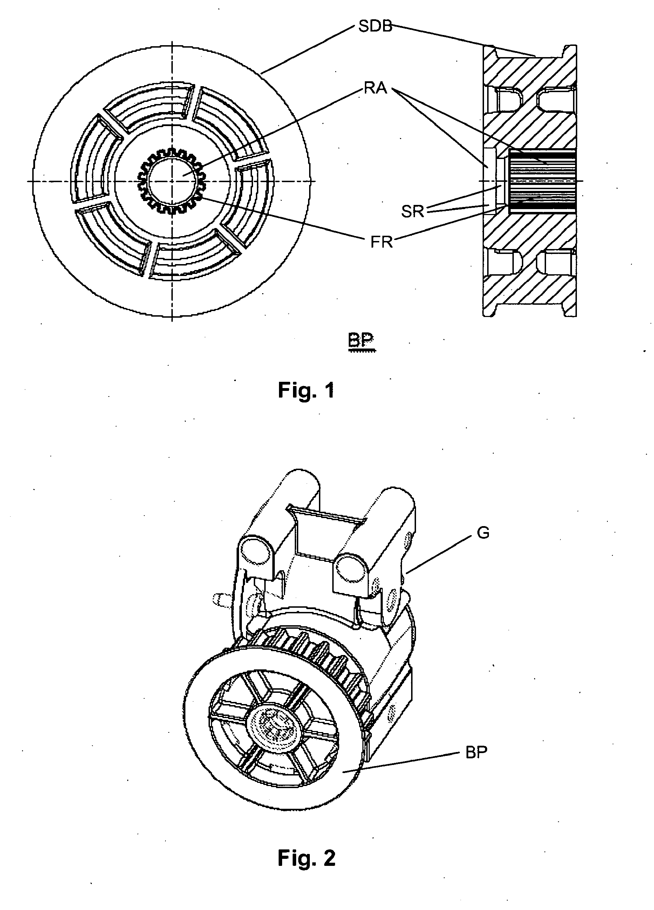

Figure 1 shows a belt pulley BP according to the invention. At the left we see a front view, at the right we see a cross section.

In both views we see a support SDB for a drive belt, a receptacle RA for the axle, and a first region FR. In the cross section at the right in addition we see a second region SR.

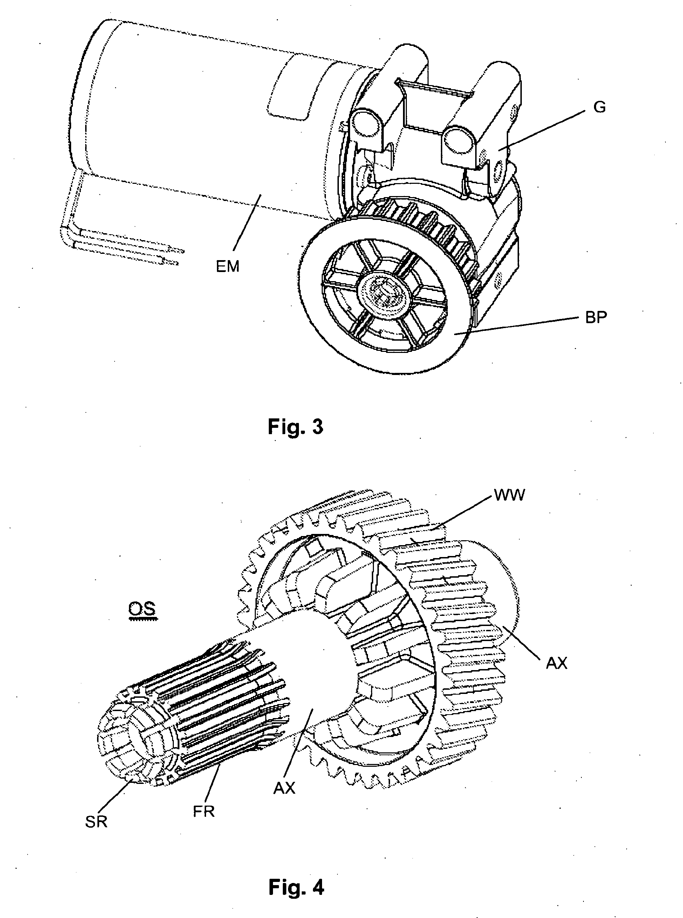

What we do not see in this figure is the fact, that in the given example the belt pulley is a toothed one for operating together with a toothed belt. This can be seen in figures 2 and 3.

The form of the belt, a toothed one, a v-belt, or a flat belt, and accordingly the form of the support SDB for the drive belt, is not of importance for the present invention. The same applies to the question whether the belt pulley guides the belt drive on both sides as in figure 1, on one side as in figures 2 and 3, or on no side.

What matters is the design of the receptacle RA for the axle. On the one hand it has to ensure, that there is no slip between the belt pulley and an axle carrying it. And on the other hand this receptacle has to ensure that the belt pulley BP be fixed on the axle.

State of the art solutions for avoiding slip is the use of a feather key in connection with a nut in the axle. Especially when using plastic material one has the possibility of better adapting the axle to the belt pulley BP. We use polyacetal (POM), especially Delrin 100 TM.

Avoiding slip according to the invention is performed by a first region FR of this receptacle RA, the profile of which is noncircular, and of coarse to combine it with an axle with a matching profile, when being used.

Preferably this profile is a regular one like a regular polygon or a multitooth, as shown in the drawings. If necessary, of course, it could be irregular, especially in such a way, that the belt pulley and an axle only match in one position.

State of the art solutions for fixing a belt pulley on an axle is the use of a circlip in connection with a groove in the axle.

The fixing of a belt pulley on an axle according to the invention is made by using a snap fit. To this end both, the belt pulley and the axle or output shaft, are provided with a second region SR.

In the belt drive this second region SR includes at least one recess apt to allow an elastic part of the axle to snap in into a form-fit way when inserted into the belt pulley through the first region FR. Correspondingly the second region of the axle or output shaft involves at least one elastic part apt to snap in into a recess of the belt pulley in a form-fit way.

In the shown example the recess in the second region SR is a circular groove open to the exterior.

In figure 2 we see a gear G completed with a belt pulley BP snapped in onto its output shaft.

In figure 3 we see the same arrangement as in figure 2, now completed to an electric motor EM with gear G and belt pulley BP.

In figure 4 we see an output shaft according to the invention for a gear, for receiving a belt pulley.

In the given example this output shaft is made out of plastic material in one piece together with the whole axle AX and the last gear wheel of the gear, here a worm wheel WW with helical gearing. Also for this part we use polyacetal (POM), especially Delrin 100 TM.

The axle AX on both sides of the worm wheel WW is prepared for receiving a ball bearing each. For mechanical reasons the worm wheel is foreseen with stiffenings.

As already mentioned when describing the belt pulley the output shaft offers a first region FR and a second region SR prepared for matching with the respective first region FR and second region SR of the belt pulley. So the first region FR here shows a multitooth. The second region SR shows a number of, here 8, elastic parts, that are equal to one another and are distributed equally over the periphery. It is clear that principally either of them alone would solve the problem.

The sharp-edged implementation of both, the groove in the belt pulley BP as shown in figure 1, and the elastic parts of the output shaft OS as shown in figure 4, ensure a form-fit connection.

## Claims

1. Belt pulley (BP) for the output shaft (OS) of a gear (G) being driven by an electric motor (EM), with a support (SDB) for a drive belt at the outer periphery and a receptacle (RA) for an axle in the centre, wherein the receptacle (RA) for the axle involves a first region (FR), the profile of which is in such a way noncircular, that between an axle being insertable therein and the belt pulley (BP) no slip is possible, **characterized in, that** the receptacle (RA) for the axle involves a second region (SR) including at least one recess apt to allow an elastic part of the axle to snap in into a form-fit way when inserted into the belt pulley (BP) through the first region (FR).

2. Gear (G) with an output shaft, for an electric motor, wherein the output shaft is provided with a belt pulley (BP) according to claim 1.

3. Electric motor (EM), wherein the motor (EM) is provided with a gear (G) according to claim 2.

4. Output shaft (OS) of a gear, for receiving a belt pulley, wherein the area apt to receive the belt pulley involves a first region (FR) on the side towards the gear (WW), the profile of which is in such a way noncircular, that between the shaft and the belt pulley to be applied there no slip is possible, **characterized in, that** the area apt to receive the belt pulley involves a second region (SR) on the side turned away from the gear (WW) involving at least one elastic part apt to snap in into a recess of the belt pulley in a form-fit way.

5. Belt pulley (BP) according to claim 1, wherein the support (SDB) for a drive belt includes teeth for accepting a toothed belt.

6. Belt pulley (BP) according to claim 1, wherein the first, noncircular region (FR) shows the profile of a regular polygon.

7. Belt pulley (BP) according to claim 1, wherein the first, noncircular region (FR) shows the profile of a multitooth.

8. Belt pulley (BP) according to claim 1, wherein the recess in the second region is a circular groove open to the exterior.

9. Output shaft (OS) according to claim 4, wherein the first, noncircular region (FR) shows the profile of a regular polygon.

10. Output shaft (OS) according to claim 4, wherein the first, noncircular region (FR) shows the profile of a multitooth.

11. Output shaft (OS) according to claim 4, wherein the second region (SR) shows a number of elastic parts, that are equal to one another and are distributed equally over the periphery.

## Patentansprüche

1. Riemenscheibe (BP) für die Abtriebswelle (OS) eines Getriebes (G), angetrieben durch einen Elektromotor (EM), mit einem Halter (SDB) für einen Treibriemen am äußeren Umfang und einer Aufnahme (RA) für eine Achse in der Mitte, wobei die Aufnahme (RA) für die Achse einen ersten Bereich (FR) aufweist, dessen Profil nicht kreisförmig ist in der Weise, dass zwischen einer Achse, die darin einsteckbar ist, und der Riemenscheibe (BP) kein Rutschen möglich ist, **dadurch gekennzeichnet, dass** die Aufnahme (RA) für die Achse einen zweiten Bereich (SR) mit mindestens einer Ausnehmung aufweist, die geeignet ist, es einem elastischen Teil der Achse zu erlauben, in einer formschlüssigen Weise einzuschnappen, wenn er durch den ersten Bereich (FR) in die Riemenscheibe (BP) gesteckt wird.

2. Getriebe (G) mit einer Abtriebswelle für einen Elektromotor, bei dem die Abtriebswelle mit einer Riemenscheibe (BP) gemäß Anspruch 1 versehen ist.

3. Elektromotor (EM), wobei der Motor (EM) mit einem Getriebe (G) gemäß Anspruch 2 versehen ist.

4. Abtriebswelle (OS) eines Getriebes zum Aufnehmen einer Riemenscheibe, wobei der für das Aufnehmen der Riemenscheibe geeignete Bereich einen ersten Bereich (FR) auf der dem Getriebe (WW) zugewandten Seite aufweist, dessen Profil nicht kreisförmig ist in der Weise, dass zwischen der Welle und der aufzuziehenden Riemenscheibe kein Rutschen möglich ist, **dadurch gekennzeichnet, dass** der für das Aufnehmen der Riemenscheibe geeignete Bereich einen zweiten Bereich (SR) auf der vom Getriebe (WW) abgewandten Seite mit mindestens einem elastischen Teil aufweist, der geeignet ist, in einer formschlüssigen Weise in eine Ausnehmung der Riemenscheibe einzuschnappen.

5. Riemenscheibe (BP) gemäß Anspruch 1, bei welcher der Halter (SDB) für einen Treibriemen Zähne für das Ergreifen eines Zahnriemens besitzt.

6. Riemenscheibe (BP) gemäß Anspruch 1, bei welcher der erste, nicht kreisförmige Bereich (FR) das Profil eines regelmäßigen Vielecks zeigt.

7. Riemenscheibe (BP) gemäß Anspruch 1, bei welcher der erste, nicht kreisförmige Bereich (FR) ein vielzahniges Profil zeigt.

8. Riemenscheibe (BP) gemäß Anspruch 1, bei welcher die Ausnehmung im zweiten Bereich eine nach außen offene, kreisförmige Nut ist.

9. Abtriebswelle (OS) gemäß Anspruch 4, bei welcher der erste, nicht kreisförmige Bereich (FR) das Profil eines regelmäßigen Vielecks zeigt.

10. Abtriebswelle (OS) gemäß Anspruch 4, bei welcher der erste, nicht kreisförmige Bereich (FR) ein vielzahniges Profil zeigt.

11. Abtriebswelle (OS) gemäß Anspruch 4, bei welcher der zweite Bereich (SR) eine Anzahl elastischer Teile zeigt, die einander gleich sind und gleichmäßig über den Umfang verteilt sind.

## Revendications

1. Poulie à courroie (BP) pour l'arbre de sortie (OS) d'un engrenage (G) qui est entraîné par un moteur électrique (EM), avec un support (SDB) pour une courroie d'entraînement au niveau de la périphérie externe et un réceptacle (RA) pour un essieu dans le centre, dans laquelle le réceptacle (RA) pour l'essieu implique une première région (FR), dont le profil est ainsi non circulaire, de sorte qu'entre un essieu qui peut être inséré à l'intérieur de ce dernier et la poulie à courroie (BP), aucun glissement n'est possible, **caractérisée en ce que** le réceptacle (RA) pour l'essieu implique une deuxième région (SR) comprenant au moins un évidement approprié pour permettre à une partie élastique de l'essieu de s'emboîter d'une manière voie adaptée à la forme, lorsqu'elle est insérée dans la poulie à courroie (BP) à travers la première région (FR).

2. Engrenage (G) avec un arbre de sortie, pour un moteur électrique, dans lequel l'arbre de sortie est prévu avec une poulie à courroie (BP) selon la revendication 1.

3. Moteur électrique (EM), dans lequel le moteur (EM) est prévu avec un engrenage (G) selon la revendication 2.

4. Arbre de sortie (OS) d'un engrenage, pour recevoir une poulie à courroie, dans lequel la surface appropriée pour recevoir la poulie à courroie implique une première région (FR) du côté orienté vers l'engrenage (WW), dont le profil est ainsi non circulaire, de sorte qu'entre l'arbre et la poulie à courroie à appliquer ici, aucun glissement n'est possible, **caractérisé en ce que** la surface appropriée pour recevoir la poulie à courroie implique une deuxième région (SR) du côté à distance de l'engrenage (WW) impliquant au moins une partie élastique appropriée pour s'emboîter dans un évidement de la poulie à courroie d'une manière adaptée à la forme.

5. Poulie à courroie (BP) selon la revendication 1, dans laquelle le support (SDB) pour une courroie d'entraînement comprend des dents pour accepter une courroie dentée.

6. Poulie à courroie (BP) selon la revendication 1, dans laquelle la première région non circulaire (FR) représente le profil d'un polygone régulier.

7. Poulie à courroie (BP) selon la revendication 1, dans laquelle la première région non circulaire (FR) représente le profil d'une dentelure.

8. Poulie à courroie (BP) selon la revendication 1, dans laquelle l'évidement dans la deuxième région est une rainure circulaire ouverte sur l'extérieur.

9. Arbre de sortie (OS) selon la revendication 4, dans lequel la première région non circulaire (FR) représente le profil d'un polygone régulier.

10. Arbre de sortie (OS) selon la revendication 4, dans lequel la première région non circulaire (FR) représente le profil d'une dentelure.

11. Arbre de sortie (OS) selon la revendication 4, dans lequel la deuxième région (SR) représente un certain nombre de parties élastiques, qui sont égales entre elles et sont réparties de manière identique sur la périphérie.
